# EUROPÄISCHE PATENTSCHRIFT

(11) **EP 1 858 995 B1**
(45) Veröffentlichungstag und Bekanntmachung des Hinweises auf die Patenterteilung: **04.03.2009**
(21) Anmeldenummer: 06708616.5
(22) Anmeldetag: 03.03.2006
(51) Int. Cl.: C09D 133/14, C09D 133/06, C09D 175/16, C09D 167/07, C08F 2/48, C08F 2/50

(54) **RADIKALISCH HÄRTBARE BESCHICHTUNGSMASSEN**
RADICALLY CURABLE COATING COMPOUNDS
SUBSTANCES D'ENDUCTION À DURCISSEMENT RADICALAIRE

(30) Priorität: 03.03.2005 DE 102005010327
(43) Veröffentlichungstag der Anmeldung: 28.11.2007
(73) Patentinhaber: BASF SE, 67056 Ludwigshafen (DE)
(72) Erfinder: BECK, Erich, 68526 Ladenburg (DE); SCHWALM, Reinhold, 67157 Wachenheim (DE); STUDER, Katia, F-68200 Mulhouse (FR); NGUYEN, Phuong, Tri, F-68200 Mulhouse (FR); DECKER, Christian, F-68200 Mulhouse (FR)
(86) Internationale Anmeldenummer: PCT/EP2006/060417
(87) Internationale Veröffentlichungsnummer: WO 2006/092434

(56) Entgegenhaltungen:
- CH-A5- 691 775
- CH-A5- 691 970

## Beschreibung

Die vorliegende Erfindung betrifft radikalisch härtbare Beschichtungsmassen, Verfahren zur Härtung derartiger Beschichtungsmassen und deren Verwendung.

Radikalisch härtbare Beschichtungsmassen, die mit Amln-Peroxid-Initiatorsystemeri gestartet werden, sind in der Literatur als sog. Härter-Beschleuniger-Systeme oder Redoxinitiatorsysteme weit verbreitet.

Nachteilig an derartigen Beschleunigern, beispielsweise Dimethylanilin oder Dimethyl-p-toluidin für beispielsweise Dibenzoylperoxid oder Kobaltsalze für Ketonperoxide, ist, daß die Reaktivität der verwendeten Peroxide z.T. derartig drastisch erhöht wird, daß Lacke, die mit solchen Systemen ausgehärtet werden sollen, eine äußerst geringe Topfzeit aufweisen, was deren Anwendbarkeit einschränkt.

Zudem zeigen die eingesetzten Amine nach einer Bewitterung oft eine Gelbfärbung, die in hellpigmentierten oder klaren Lacken unerwünscht ist.

Zahlreiche Untersuchungen haben die Reaktivität von Redoxinitiatorsystemen zum Gegenstand:

G. David, C. Loubat, B. Boutevin, J. J. Robin und C. Moustrou beschreiben in Eur. Polym. J. 39 (2003), 77 - 83 die Polymerisierung von Ethylacrylat mit einem Redoxinitiatorsystem aus Dibenzoylperoxid und Dimethylanilin unter Stickstoffatmosphäre.

B. Vazquez, C. Elvira, J. San Roman, B. Levenfeld, Polymer 38 (1997), 4365 - 4372 beschreibt in ähnlicher Weise die Polymerisierung von Methylmethacrylat mit einem Redoxinitiatorsystem aus Dibenzoylperoxid und Dimethyltoluidin unter Stickstoffatmosphäre.

Auch die Kombination einer radikalischen, thermisch induzierten Härtung mit anderen Härtungsmechanismen (dual cure) ist bekannt:
H. Xie, J. Guo, Eur. Polym. J. 38 (2002), 2271 - 2277 polymerisieren Methacrylate mit einem Dibenzoylperoxid und Dimethylanilin und bauen gleichzeitig durch Umsetzung einer isocyanathaltigen Komponente mit polymeren Diolen ein interpenetrierendes Netzwerk auf.
K. Dean, W. D. Cook, M. D. Zipper, P. Burchill, Polymer 42 (2001), 1345 - 1359 beschreibt Wechselwirkungen von primären Aminen als Härter für Epoxyharze auf die radikalische Härtung eines Systems Styrol/Bisphenol A diglycidyl dimethacrylat mit verschiedenen Peroxyverbindungen, wie Cumylhydroperoxid, Dibenzoylperoxid und Butanonperoxid.
X. Feng, K. Qiu, W. Cao, Handbook of Engineering Polymeric Materials (1997), 227 - 242 beschreiben Redoxinitiatorsysteme aus N-hydroxyalkylierten aromatischen Aminen und Dibenzoylperoxid.

An anderer Stelle wird im selben Dokument auf eine Aktivierung des Photoinitiators Benzophenon mit primären oder sekundären Aminen eingegangen.

Eine Kombination dieser speziellen Mechanismen wird jedoch nicht offenbart.

CH 691970 A5 offenbart photopolymerisierbare Zusammensetzungen, enthaltend mindestens eine photopolymerisierbare Verbindung und mindestens einen Photoinitiator.

CH 691775 A5 offenbart photopolymerisierbare Zusammensetzungen, enthaltend mindestens eine photopolymerisierbare Verbindung und mindestens einen Photoinitiator.

Eine Wechselwirkung mit Aminen wird in beiden Dokumenten nicht beschrieben.

Aufgabe der vorliegenden Erfindung war es, Beschichtungsmassen zur Verfügung zustellen, die durch Einsatz von zwei unabhängigen Initiatorsystemen radikalisch härtbar sind und dabei eine gute Topfzeit aufweisen und zu keiner Vergilbung der fertigen Beschichtung führen.

Die Aufgabe wurde gelöst durch radikalisch härtbare Beschichtungsmassen, enthaltend
a) mindestens eine Verbindung (I) mit mindestens einer Peroxygruppe,
b) mindestens ein aromatisches Amin der Formel (II)

   Ar-NR¹R²,

   worin
   Ar ein gegebenenfalls substituiertes aromatisches Ringsystem mit 6 bis 20 Kohlenstoffatomen und
   R¹ und R² jeweils unabhängig voneinander gegebenenfalls substituierte Alkylreste, mit der Maßgabe, daß mindestens einer der beiden Reste R¹ und R² mindestens 2 Kohlenstoffatome aufweist, bedeuten,
c) mindestens eine Verbindung mit mindestens einer ethylenisch (α,β-ungesättigten Carbonylverbindung,
d) mindestens einen Photoinitiator und
e) gegebenenfalls mindestens ein Pigment.

Es ist ein Vorteil der vorliegenden Beschichtungsmassen, daß sie sowohl thermisch als auch photochemisch startbar sind und das thermische Radikalinitiatorsystem in seiner Reaktivität so abgestimmt ist, daß es einerseits eine ausreichend hohe Reaktivität und andererseits eine gute Lagerstäbilität (Topfzeit) aufweist. Die eingesetzten Amine zeigen zudem eine verringerte Vergilbungsneigung.

Die erfindungsgemäßen Beschichtungsmassen enthalten die folgenden Komponenten:

### a) Mindestens eine Verbindung (I) mit mindestens einer Peroxygruppe.

Verbindungen (I) sind solche, die mindestens eine Peroxygruppe (-O-O-) enthalten.

Dabei kann es sich um
a1) peroxidische Salze,
a2) Wasserstoffperoxid,
a3) Hydroperoxide, also Verbindungen, die mindestens eine Hydroperoxidgruppe (-O-O-H) enthalten, oder
a4) Peroxide, also Verbindungen, die beidseitig der Peroxygruppe (-O-O-) organisch substituiert sind, handeln.

Beispiele sind solche, die im Polymer Handbook Aufl. 1999, Wiley & Sons, New York, aufgeführt sind.

Verbindungen a1) sind beispielsweise Peroxodisulfate, beispielsweise Kalium-, Natrium- oder Ammoniumperoxodisulfat, Peroxide, beispielsweise Natriumperoxid oder Kaliumperoxid, Perborate, wie beispielsweise Ammonum-, Natrium- oder Kaliumperborät, Monopersulfate, beispielsweise Ammonium-, Natrium- oder Kallumhydrogenmonopersulfat, sowie Salze der unter a4) aufgeführten Peroxycarbonsäuren, beispielsweise Ammonium-, Natrium-, Kalium- oder Magnesium Monoperoxyphthalat.

Bei a2) handelt es sich um Wasserstoffperoxid, beispielsweise als wäßrige Lösung in einer Konzentration von 10 bis 50 Gew%.

Verbindungen a3) sind beispielsweise tert. Butylhydroperoxid, tert. Amylhydroperoxid, Cumylhydroperoxid, Peressigsäure, Perbenzoesäure, Monoperphthalsäure oder meta-Chlorperbenzoesäure.

Verbindungen a4) sind beispielsweise Ketonperoxide, Dialkylperoxide, Diacylperoxide oder gemischte Acyl-Alkylperoxide.

Beispiele für Diacylperoxide sind Dibenzoylperoxid und Diacetylperoxid.
Beispiele für Dialkylperoxide sind Di-tert-butylperoxid, Di-cumylperoxid, Bis-(α,α-dimethylbenzyl)peroxid und Diethylperoxid.
Ein Beispiel für gemischte Acyl-Alkylperoxide ist tert. Butylperbenzoat.
Ketonperoxide sind beispielsweise Acetonperoxid, Butanonperoxid und 1,1'-Peroxybis-cyclohexanol.
Sonstige sind beispielsweise 1,2,4-Trioxolan oder 9,10-Dihydro-9,10-epidioxidoanthracen.

Bevorzugte Verbindungen a) sind die Verbindungen a1), a3) und a4), besonders bevorzugt sind Verbindungen a3) und a4) und ganz besonders bevorzugt sind die Verbindungen a4). Unter diesen sind Diacylperoxide, Dialkylperoxide und Ketonperoxide bevorzugt, besonders bevorzugt Diacylperoxide und Dialkylperoxide und ganz besonders bevorzugt Diacylperoxide.

Insbesondere ist Dibenzoylperoxid eine bevorzugte Verbindung a).

Die Verbindungen a) sind zumeist fest und können entweder in fester Form oder gelöst oder suspendiert in einem geeigneten Lösungsmittel in die Beschichtungsmasse eingebracht werden. Bevorzugt verwendet man eine Lösung oder Suspension in einer der Verbindungen c) der erfindungsgemäßen Beschichtungsmasse, besonders bevorzugt eine Lösung.

### b) Mindestens ein aromatisches Amin der Formel (II)

Ar-NR¹R²,

worin
Ar ein gegebenenfalls substituiertes aromatisches Ringsystem mit 6 bis 20 Kohlenstoffatomen und
R¹ und R² jeweils unabhängig voneinander gegebenenfalls substituierte Alkylreste bedeuten, mit der Maßgabe, daß mindestens einer der beiden Reste R¹ und R² mindestens 2 Kohlenstoffatome aufweist,
bedeuten.

Beispiele für Ar sind gegebenenfalls mit einem oder mehreren C₁- bis C₁₂-Alkyl, C₁- bis C₁₂-Alkyloxy, C₆- bis C₁₂-Aryl, Ce- bis C₁₂-Aryloxy, C₅- bis C₁₂-Cycloalkyl, C₅- bis C₁₂-Cycloalkyloxy oder Halogen substituierte Phenyl-, α- oder β- Naphthylreste.

Die Substituenten können geradkettig oder verzweigt und ihrerseits wiederum substituiert sein.

Darin bedeuten C₁- bis C₁₂-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Dlethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, methoxybutyl, 6-Methoxyhexyl, 2-Ethoxyethyl, 2-Ethoxypropyl, 3-Ethoxypropyl, 4-Ethoxybutyl oder 6-Ethoxyhexyl,

Darin bedeuten C₆ - C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,

Darin bedeuten substituiertes C₅- C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl.

Beispiele für Ar sind Phenyl, o-, m- oder p-Tolyl, 2,4-Dimethylphenyl, 2,4,6-Trimethylphenyl, 2-, 4- oder 6-Ethylphenyl, 2,4-Diethylphenyl, 2,4,6-Triethylphenyl, 2-, 4- oder 6-Chlorphenyl, 2,4-Dichlorphenyl, 2,4,6-Trichlorphenyl, 2-, 4- oder 6-Methoxyphenyl, 2,4-Dimethoxyphenyl, 2,4,6-Trimethoxyphenyl, α- oder β-Naphthyl.

Bevorzugte Reste Ar sind Phenyl, p-Tolyl, 4-Chlorphenyl, 4-Methoxyphenyl und Naphthyl, besonders bevorzugt sind Phenyl und p-Tolyl, ganz besonders bevorzugt ist Phenyl.

Beispiele für R¹ und unabhängig davon für R² sind gegebenenfalls mit C₁- bis C₁₂-Alkyloxy, C₆- bis C₁₂-Aryl, C₆- bis C₁₂-Aryloxy, C₅- bis C₁₂-Cycloalkyl, C₅- bis C₁₂-Cycloalkyloxy, Hydroxy oder Halogen substituierte C₁- bis C₁₂-Alkylreste, wobei Alkyl, Aryl und Cycloalkyl die obigen Bedeutungen annehmen.

Beispiele für R¹ und unabhängig davon für R² sind Methyl, Ethyl, n-Propyl, iso-Propyl, n-Butyl, iso-Butyl, sek-Butyl, tert-Butyl, n-Hexyl, 2-Hydroxyethyl, 2-Hydroxypropyl, 1-Methyl-2-hydroxyethyl, 2-Methyl-2-hydroxypropyl, 2-Cyanoethyl, 2-Methoxycarbonylethyl, 2-Ethoxycarbonylethyl, 2-n-Butoxycarbonylethyl oder Benzyl.

Erfindungsgemäß weist mindestens einer der beiden Reste R¹ und R² mindestens zwei Kohlenstoffatome auf.

Bevorzugt weisen beide Reste R¹ und R² mindestens zwei Kohlenstoffatome auf.

Besonders bevorzugte Reste R¹ und R² sind hydroxysubstituierte C₂-C₁₂-Alkylreste.

Ganz besonders bevorzugte Reste R¹ und R² sind unabhängig voneinander Ethyl, iso-Propyl, 2-Hydroxyethyl, 2-Hydroxypropyl, und Benzyl, insbesondere bevorzugt sind 2-Hydroxyethyl und 2-Hydroxypropyl, und speziell 2-Hydroxyethyl.

Bevorzugt sind die Reste R¹ und R² gleich.

In einer bevorzugten Ausführungsform weist mindestens einer der beiden Reste R¹ und R² an dem Kohlenstoffatom, das dem Stickstoffatom benachbart ist, also dem α-Kohlenstoffatom, mindestens ein Wasserstoffatom auf, besonders bevorzugt weisen beide Reste R¹ und R² am α-Kohlenstoffatom mindestens ein Wasserstoffatom auf.

Bevorzugte Verbindungen b) sind N,N-Diethylanilin, N,N-Di-n-butylanilin, N,N-Di-isopropylanilin, N-Methyl-N-(2-hydroxyethyl)-anilin, N-Methyl-N-(2-hydroxyethyl)-p-tolidin, N,N-Diethyl-o-tolidin, N,N-Di-n-butyl-o-tolidin, N,N-Diethyl-p-tolidin, N,N-Di-n-butyl-p-tolidin, N,N-Di-(2-hydroxyethyl)-anilin, N,N-Di-(2-hydroxyethyl)-o-tolidin, N,N-Di-(2-hydroxyethyl)-p-tolidin, N,N-Di-(2-hydroxypropyl)-anilin, N,N-Di-(2-hydroxypropyl)-p-tolidin und N,N-Di-(2-hydroxypropyl)-o-tolidin. Besonders bevorzugt sind N,N-Di-(2-hydroxyethyl)-anilin, N,N-Di-(2-hydroxyethyl)-p-tolidin, N,N-Di-(2-hydroxypropyl)-anilin und N,N-Di-(2-hydroxypropyl)-p-tolidin. Ganz besonders bevorzugt sind N,N-Di-(2-hydroxyethyl)-anilin und N,N-Di-(2-hydroxyethyl)-p-tolidin und insbesondere bevorzugt ist N,N-Di-(2-hydroxyethyl)-anilin.

Bekannt sind als Beschleuniger für peroxidische Starter beispielsweise Dimethylanilin oder Dimethyl-p-toluidin. Dadurch, daß erfindungsgemäß mindestens einer der beiden Reste R¹ und R², bevorzugt beide mindestens zwei Kohlenstoffatome aufweisen, wird die Reaktivität des erfindungsgemäßen Amin-Peroxid-Initiatorsystems genau abgestimmt, so daß die solche enthaltenden Beschichtungsmassen einerseits eine ausreichende Reaktivität und andererseits eine ausreichende Topfzeit aufweisen.

Da die Reaktivität erfindungsgemäß eine entscheidende Rolle spielt, sind solche Amine, insbesondere der Formel (II) im Gemisch mit Peroxyverbindungen a) bevorzugt, die in einem Maßsystem eine ähnliche Reaktivität wie das Redoxinitiatorsystem N,N-Di-(2-hydroxyethyl)-anilin/Dibenzoylperoxid aufweisen.

Dazu wird eine 0,5 Gew%ige Zubereitung des betreffenden Amins mit 1,5 Gew% der betreffenden Peroxyverbindung in Methacrylsäuremethylester (frisch destilliert) bei 25 °C unter Stickstoffabdeckung vermischt und gerührt und die Zeit t bis zum Gelierpunkt, also einem starken Ansteigen der Viskosität, beispielsweise über einen Schwellenwertvon 1 Pas, gemessen. Der so bestimmte Zeitraum t wird ins Verhältnis gesetzt mit der gleichermaßen bestimmten Zeitspanne t_{Referenz} für das Redoxinitiatorsystem N,N-Di-(2-hydroxyethyl)-anilin/Dibenzoylperoxid.

Erfindungsgemäß bevorzugt sind solche Amine, insbesondere solche Amine der Formel (II), für die gilt
t : t_{Referenz} = 0,5 - 1,5, besonders bevorzugt 0,66 - 1,33, ganz besonders bevorzugt 0,8 - 1,2 und insbesondere 0,9 -1,1.

Ohne an eine Theorie gebunden sein zu wollen, kann vermutet werden, daß durch die im Vergleich zu Dimethylanilin oder Dimethyl-p-toluidin sterisch anspruchsvolleren Reste und stärkeren +I-aktiven Reste R¹ und R² in den erfindungsgemäßen Systemen einerseits sich radikalische Zentren am Stickstoffatom weniger leicht bilden und diese andererseits besser abgeschirmt werden und somit stabiler sind, so daß die Reaktivität des erfindungsgemäßen Amin-Peroxid-Initiatorsystems gegenüber dem korrespondierenden System mit Dimethylanilin oder Dimethyl-p-toluidin moderiert ist.

### c) Mindestens eine Verbindung mit mindestens einer ethylenisch α,β-ungesättigten Carbonylverbindung.

Bei derartigen Verbindungen kann es sich bevorzugt um ungesättigte Polyester oder um (Meth)Acrylatverbindungen handeln.

Besonders bevorzugt handelt es sich dabei um (Meth)acrylatverbindungen, ganz besonders bevorzugt um Acrylatverbindungen, d.h. Derivate der Acrylsäure.

Die ungesättigten Polyester und (Meth)acrylat-Verbindungen enthalten mehr als 2, bevorzugt 2 bis 20, besonders bevorzugt 2 bis 10 und ganz besonders bevorzugt 2 bis 6 radikalisch polymerisierbare, α,β-ethylenisch ungesättigte Carbonylgruppen.

Derartige Verbindungen mit mindestens zwei radikalisch polymerisierbaren Gruppen können im Gemisch mit Reaktiwerdünnern vorliegen, also Verbindungen mit einer radikalisch polymerisierbaren Gruppe.

Besonders bevorzugt sind solche Verbindungen mit einem Gehalt an ethylenisch ungesättigte Doppelbindungen von 0,1 - 0,7 mol/100 g, ganz besonders bevorzugt 0,2 - 0,6 mol/100 g.

Das zahlenmittlere Molekulargewicht Mₙ der Verbindungen liegt, wenn nicht anders angegeben, bevorzugt unter 15000, besonders bevorzugt bei 300 - 12000, ganz besonders bevorzugt bei 400 bis 5000 und insbesondere bei 500 - 3000 g/mol (bestimmt durch Gelpermeationschromatographie mit Polystyrol als Standard und Tetrahydrofuran als Elutionsmittel).

Ungesättigte Polyester sind solche Polyester, die aus Diolen und Dicarbonsäuren mit jeweils mindestens zwei Hydroxy- bzw. Carboxylgruppen, sowie gegebenenfalls Polyolen und/oder Polycarbonsäuren mit jeweils mindestens drei Hydroxy- bzw. Carboxylgruppen aufgebaut sind, mit der Maßgabe, daß als Dicarbonsäure zumindest teilweise mindestens eine α,β-ungesättigte Dicarbonsäurekomponente eingebaut enthalten ist. Derartige α,β-ungesättigte Dicarbonsäurekomponenten sind bevorzugt Maleinsäure, Fumarsäure oder Maleinsäureanhydrid, besonders bevorzugt Maleinsäureanhydrid.

Dicarbonsäuren zum Aufbau von derartigen Polyestern sind Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Azelainsäure, 1,4-Cyclohexandicarbonsäure oder Tetrahydrophthalsäure, Korksäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Die Peroxyverbindung a) und Amin b) sind bevorzugt so gewählt, daß sie die 0,5 bis 1,5fache Reaktivität aufweisen wie ein Gemisch aus N,N-Di-(2-hydroxyethyl)-anilin und Dibenzoylperoxid, gemessen bei 25 °C in Methacrylsäuremethylester in Form von 0,5 Gew%igen Zubereitungen des betreffenden Amins b) mit 1,5 Gew% der betreffenden Peroxyverbindung a), wobei als Reaktivität der Zeitraum zwischen Vermischen von Amin und Peroxyverbindung bis zum Anstieg der Viskosität infolge Gelbildung verstanden wird.

Polycarbonsäuren zum Aufbau von derartigen Polyestern sind beispielsweise Trimellithsäure, Hemimellithsäure, Trimesinsäure oder deren Anhydride.

Diole zum Aufbau von derartigen Polyestern sind 1,2-Propandiol, Ethylenglykol, 2,2-Dimethyl-1,2-Ethandiol, 1,3-Propandiol, 1,2-Butandiol, 1,3-oder 1,4-Butandiol, 3-Methylpentan-1,5-diol, 2-Ethythexan-1,3-diol, 2,4-Diethyloctan-1,3-diol, 1,6-Hexandiol, Diethylenglykol, Triethylenglykol, Tetraethylenglykol, Pentaethylenglykol, Neopentylglykol, Hydroxypivalinsäureneopentylglykolester, 2-Ethyl-1,3-Propandiol, 2-Methyl-1,3-Propandiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3-und 1,4-Cyclohexandimethanol, 1,2-, 1,3-oder 1,4-Cyclohexandiol. Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecen-1,12-diol. Weiterhin bevorzugt ist Neopentylglykol.

Polyole zum Aufbau von derartigen Polyestern sind Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit und Isomalt.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Als (Meth)acrylatverbindungen genannt seien (Meth)acrylsäureester und insbesondere Acrylsäureester von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol und deren höher kondensierte Vertreter, z.B. wie Diethylenglykol, Triethylenglykol, Dipropylenglykol, Tripropylenglykol etc., 1,2-, 1,3- oder 1,4-Butandiol, 1,5-Pentandiol, 1,6-Hexandiol, 3-Methyl-1,5-pentandiol, Neopentylglykol, alkoxylierte phenolische Verbindungen, wie ethoxylierte bzw. propoxylierte Bisphenole, 1,2-, 1,3- oder 1,4-Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxylierten und/oder propoxylierten Alkohole sowie weiterhin Poly-THF mit einem Molgewicht zwischen 162 und 2000, Poly-1,3-propandiol mit einem Molgewicht zwischen 134 und 2000 oder Polyethylenglykol mit einem Molgewicht zwischen 238 und 2000.

Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d.h. 1 mol Hydroxylgruppe kann mit bis zu 10 mol Alkylenoxiden alkoxyliert sein.

Als (Meth)acrylatverbindungen seien weiterhin Polyester(meth)acrylate genannt, wobei es sich um die (Meth)acrylsäureester von Polyesterolen handelt, sowie Urethan-, Epoxid-, Polyether-; Silicon-, Carbonat- oder Melamin(meth)acrylate.

Besonders geeignet sind erfindungsgemäße Beschichtungsmassen, in denen mindestens eine Verbindung c) ein Urethan- oder Polyester(meth)acrylat ist, gan besonders bevorzugt mindestens ein Urethan(meth)acrylat.

Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen.

Die Urethan(meth)acrylate haben vorzugsweise ein zahlenmittleres Molgewicht Mₙ von 500 bis 20 000, insbesondere von 750 bis 10 000 besonders bevorzugt 750 bis 3000 g/mol (bestimmt durch Gelpermeationschromatographie mit Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Epoxid(meth)acrylate sind erhältlich durch Umsetzung von Epoxiden mit (Meth)acrylsäure. Als Epoxide in Betracht kommen z.B epoxidierte Olefine oder Glycidylether, z.B. Bisphenol-A-diglycidylether oder aliphatische Glycidylether, wie Butandioldiglycidether.

Melamin(meth)acrylate sind erhältlich durch Umsetzung von Melamin mit (Meth)acrylsäure oder deren Ester.

Die Epoxid(meth)acrylate und Melamin(meth)acrylate haben vorzugsweise ein zahlenmittleres Molgewicht Mₙ von 500 bis 20000, besonders bevorzugt von 750 bis 10000 g/mol und ganz besonders bevorzugt von 750 bis 3000 g/mol; der Gehalt an (Meth)acrylgruppen beträgt vorzugsweise 1 bis 5, besonders bevorzugt 2 bis 4 pro 1000 g Epoxid(meth)acrylat oder Melamin(meth)acrylat (bestimmt durch Gelpermeationschromatographie mit Polystyrol als Standard und Tetrahydrofuran als Elutionsmittel).

Weiterhin geeignet sind Carbonat(meth)acrylate, die im Mittel vorzugsweise 1 bis 5, insbesondere 2 bis 4, besonders bevorzugt 2 bis 3 (Meth)acrylgruppen und ganz besonders bevorzugt 2(Meth)acrylgruppen enthalten.

Das zahlungsmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol (bestimmt durch Gelpermeationschromatographie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure oder auch Umesterung mit (Meth)acrylsäureestem, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

Als Reaktivverdünner kommen strahlungshärtbare, radikalisch oder kationisch polymerisierbare Verbindungen mit nur einer ethylenisch ungesättigten, copolymerisierbaren Gruppe in Betracht.

Genannt seien z.B. C₁-C₂₀-Alkyl(meth)acrylate, Vinylaromaten mit bis zu 20 C-Atomen, Vinylester von bis zu 20 C-Atomen enthaltenden Carbonsäuren, ethylenisch ungesättigte Nitrile, Vinylether von 1 bis 10 C-Atome enthaltenden Alkoholen, α,β-ungesättigte Carbonsäuren und deren Anhydride und aliphatischen Kohlenwasserstoffen mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

α,β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Als vinylaromatische Verbindungen kommen z.B. Vinyltoluol, α-Butylstyrol, 4-n-Butylstyrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar.

### d) Mindestens einen Photoinitiator

Als Photoinitiatoren können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

Erfindungsgemäß werden darunter solche Photoinitiatoren verstanden, die unter Lichteinwirkung Radikale freisetzen und eine radikalische Reaktion, beispielsweise eine radikalische Polymerisation, starten können.

In Betracht kommen beispielsweise Phosphinoxide, Benzophenone, α,-Hydroxy alkyl-aryl-ketone, Thioxanthone, Anthrachinone, Acetophenone, Benzoine und Benzoinether, Ketale, Imidazole oder Phenylglyoxylsäuren und Gemische davon.

Phosphinoxide sind beispielsweise Mono- oder Bisacylphosphinoxide, wie z.B. (Bis(2,4,6-Trimethylbenzoyl)phenylphosphinoxid), wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid, Ethyl-2,4,6-trimethylbenzoylphenylphosphinat oder Bis(2,6-dimethoxybenzoyl)-2,4,4-trimethylpentylphosphinoxid,

Benzophenone sind beispielsweise Benzophenon, 4-Aminobenzophenon, 4,4'-Bis(dimethylamino)benzophenon, 4-Phenylbenzophenon, 4-Chlorbenzophenon, Michlers Keton, o-Methoxybenzophenon, 2,4,6-Trimethylbenzophenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon,

α-Hydroxy-alkyl-aryl-ketone sind beispielsweise 1-Benzoylcyclohexan-1-ol (1-Hydroxy-cyclohexyl-phenylketon), 2-Hydroxy-2,2-dimethylacetophenon (2-Hydroxy-2-methyl-1-phenyl-propan-1-on), 1-Hydroxyacetophenon, 1-[4-(2-Hydroxyethoxy)-phenyl]-2-hydroxy-2-methyl-1-propan-1-on oder Polymeres, das 2-Hydroxy-2-methyl-1-(4-isopropen-2-yl-phenyl)-propan-1-on einpolymerisiert enthält (Esacure® KIP 150)

Xanthone und Thioxanthone sind beispielsweise 10-Thioxanthenon, Thioxanthen-9-on, Xanthen-9-on, 2,4-Dimethylthioxanthon, 2,4-Diethylthioxanthon, 2,4-Di-iso-propylthioxanthon, 2,4-Dichlorthioxanthon oder Chloroxanthenon,

Anthrachinone sind beispielsweise β-Methylanthrachinon, *tert*-Butylanthrachinon, Anthrachinoncarbonylsäureester, Benz[de]anthracen-7-on, Benz[a]anthracen-7,12-dion, 2-Methylanthrachinon, 2-Ethylanthrachinon, 2-*tert*-Butylanthrachinon, 1-Chloranthrachinon oder 2-Amylanthrachinon,

Acetophenone sind beispielsweise Acetophenon, Acetonaphthochinon, Valerophenon, Hexanophenon, α-Phenylbutyrophenon, p-Morpholinopropiophenon, Dibenzosuberon, 4-Morpholinobenzophenon, p-Diacetylbenzol, 4'-Methoxyacetophenon, α-Tetralon, 9-Acetylphenanthren, 2-Acetylphenanthren, 3-Acetylphenanthren, 3-Acetylindol, 9-Fluorenon, 1-Indanon, 1,3,4-Triacetylbenzol, 1-Acetonaphthon, 2-Acetonaphthon, 2,2-Dimethoxy-2-phenylacetophenon, 2,2-Diethoxy-2-phenylacetophenon, 1,1-Dichloracetophenon, 1-Hydroxyacetophenon, 2,2-Diethoxyacetophenon, 2-Methyl-1-[4-(methylthio)-phenyl]-2-morpholinopropan-1-on, 2,2-Dimethoxy-1,2-diphenylethan-2-on oder 2-Benzyl-2-dimethylamino-1-(4-morpholinophenyl)-butan-1-on,

Benzoine und Benzoinether sind beispielsweise 4-Morpholinodeoxybenzoin, Benzoin, Benzoin-iso-butylether, Benzoin-tetrahydropyranylether, Benzoin-methylether, Benzoin-ethylether, Benzoin-butylether, Benzoin-iso-propylether oder 7-H-Benzoin-methylether oder

Ketale sind beispielsweise Acetophenondimethylketal, 2,2-Diethoxyacetophenon, oder Benzilketale, wie Benzildimethylketal.

Phenylglyoxylsäuren sind beispielsweise in DE-A 198 26 712, DE-A 19913 353 oder WO 98/33761 beschrieben.

Weiterhin verwendbare Photoinitiatoren sind beispielsweise Benzaldehyd, Methylethylketon, 1-Naphthaldehyd, Triphenylphosphin, Tri-o-Tolylphosphin oder 2,3-Butandion.

Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Eine besondere Ausführungsform der vorliegenden Erfindung besteht darin, aminogruppenhaltige Photoinitiatoren als Verbindungen c) einzusetzen, beispielsweise 4-Aminobenzophenon, 4,4'-Bis(dimethylamino)benzophenon, 2-Benzyl-2-dimethylamino-1-(4-morpholinophenyl)-butan-1-on oder 4-Morpholinodeoxybenzoin.

### e) Gegebenenfalls mindestens ein Pigment.

Pigmente sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1g/1000 g Anwendungsmedium, bevorzugt unter 0,5, besonders bevorzugt unter 0,25, ganz besonders bevorzugt unter 0,1 und insbesondere unter 0,05 g/1000 g Anwendungsmedium.

Beispiele für Pigmente umfassen beliebige Systeme von Absorptions- und/oder Effekt-pigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepaßt werden. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z,B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g /1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Im Gegensatz dazu sind als koloristisch inerte Füllstoffe alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Besonders bevorzugte erfindungsgemäße Beschichtungsmassen enthalten mindestens ein Pigment.

Unter dem Beschichtungsmedium wird das das Pigment umgebende Medium verstanden, beispielsweise Klarlacke, Bindemittel, Pulver, beispielsweise für Pulverlacke, Kunststofffilme oder Folien.

Optional können die erfindungsgemäßen Beschichtungsmassen zusätzlich zu einer chemischen Härtung befähigt sein.

Mit dem Begriff "Dual Cure" beziehungsweise "Multi Cure" ist im Rahmen dieser Schrift ein Härtungsprozeß bezeichnet, der über zwei beziehungsweise mehr als zwei Mechanismen erfolgt und zwar beispielsweise ausgewählt aus strahlungs-, feuchtigkeits-, chemisch, oxidativ und/oder thermisch härtend, bevorzugt ausgewählt aus strahlungs-, feuchtigkeits-, chemisch und/oder thermisch härtend und besonders bevorzugt ausgewählt aus strahlungs-, chemisch und/oder thermisch härtend.

Strahlungshärtung im Sinne dieser Schrift ist definiert als die Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Thermische Härtung im Sinne dieser Schrift bedeutet hier radikalische Polymerisation infolge Zerfall von Peroxyverbindungen a) bei einer Temperatur von 20 °C bis 120 °C.

Chemische Härtung im Sinne dieser Schrift ist definiert als die Polymerisation von polymerisierbaren Verbindungen infolge einer Reaktion von gegebenenfalls verkappten Isocyanatgruppen (-NCO) mit gegenüber Isocyanat reaktiven Gruppen, beispielsweise Hydroxy- (-OH), primären Amino (-NH₂), sekundären Amino- (-NH-) oder Thiolgruppen (-SH), bevorzugt Hydroxy-, primären Amino- oder sekundären Aminogruppen, besonders bevorzugt Hydroxy- oder primären Aminogruppen und ganz besonders bevorzugt Hydroxygruppen.

Dazu können die erfindungsgemäßen Beschichtungsmassen zusätzlich mindestens eine isocyanatgruppenhaltige Komponente f) und mindestens eine Komponente g) enthalten, die mindestens eine gegenüber Isocyanat reaktive Gruppe enthalten.

Isocyanatgruppenhaltige Komponenten f) sind beispielsweise aliphatische, aromatsche und cycloaliphatische Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Uretdione, Urethane, Allophanate, Oxadiazintrione und Iminooxadiazintrione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Es können auch Gemische der genannten Diisocyanate vorliegen.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanate mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Besonders bevorzugt sind Hexamethylendiisocyanat, 1,3-Bis(isocyanatomethyl)-cyclohexan, Isophorondiisocyanat und Di(isocyanatocyclohexyl)methan, ganz besonders bevorzugt sind Isophorondiisocyanat und Hexamethylendiisocyanat, insbesondere bevorzugt ist Hexamethylendiisocyanat.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NGO-Gehait von 18 bis 25 Gew.-% und eine mittlere NCO-Funktionalität von 2,8 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, *iso*-Propanol, n-Propanol, n-Butanol, *iso*-Butanol, sek-Butanol, *tert-*Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol oder mehrwertige Alkohole, wie sie oben bei den Polyesterolen aufgeführt sind, oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von.2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanate und Kohlendioxid herstellbar.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.

Die Polyisocyanate 1) bis 7) können im Gemisch, gegebenenfalls auch im Gemisch mit Diisocyanate, eingesetzt werden.

Die Isocyanatgruppen können auch in verkappter Form vorliegen. Als Verkappungsmittel für NCO-Gruppen eignen sich z.B. Oxime, Phenole, Imidazole, Pyrazole, Pyrazolinone, Diketopiperazine, Caprolactam, Malonsäureester oder Verbindungen, wie sie genannt sind in den Veröffentlichungen von Z.W. Wicks, Prog. Org. Coat. 3 (1975) 73 - 99 und Prog. Org. Coat 9 (1981), 3-28 sowie in Houben-Weyl, Methoden der Organischen Chemie, Bd. XIV/2, 61 ff. Georg Thieme Verlag, Stuttgart 1963, oder tert.-Butylbenzylamin, wie es z.B. beschrieben ist in der DE-A1 102 26 925

Unter Verkappungs- bzw. Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche Verbindungen mit blockierten Isocyanatgruppen kommen üblicherweise in Dual-Cure-Beschichtungsmitteln zur Anwendung, die über lsocyanatgruppenhärtung endgehärtet werden.

Komponente g) sind Verbindungen, die mindestens eine, bevorzugt mindestens zwei gegenüber Isocyanat reaktive Gruppe enthalten.

Dabei handelt es sich beispielsweise um höhermolekulare Di- und/oder Polyole, die ein Molekulargewicht von 500 bis 5000, vorzugsweise von 100 bis 3000 g/mol haben.

Die mittlere Funktionalität beträgt in der Regel besonders bevorzugt von 2 bis 10.

Bei den höhermolekularen Diolen handelt es sich insbesondere um Polyesterpolyole, die z.B. aus Ullmanns Encyklopädie der technischen Chemie, 4. Auflage, Band 19, S. 62 bis 65 bekannt sind.

Bevorzugt werden ungesättigte oder bevorzugt gesättigte Polyesterpolyole eingesetzt, die durch Umsetzung der oben unter c) genannten Dicarbonsäuren, bevorzugt der dort genannten gesättigten Dicarbonsäuren, mit den oben genannten Diolen, gegebenenfalls unter Zusatz der oben genannten Polycarbonsäuren und/oder Polyolen erhältlich sind.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wie sie oben unter c) aufgeführt sind.

Daneben kommen Polyetherdi- oder -polyole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxydiphenyl)-propan, Anilin, oder den oben als Aufbaukomponenten für Polyester genannten Polyolen, beispielsweise Trimethylolpropan oder Pentaerythrit, erhältlich.

Besonders bevorzugt sind Polyethylenoxid oder Polytetrahydrofuran mit einem Molekulargewicht von 2000 bis 5000 g/mol, und vor allem 3500 bis 4500 g/mol.

Weiterhin sind Polyacrylatpolyole bevorzugt. Dabei handelt es sich zumeist um Copolymerisate von im wesentlichen (Meth)Acrylsäureestern, beispielsweise den oben bei den Reaktiwerdünnern aufgeführten C₁-C₂₀(Alkyl(meth)acrylaten, mit Hydroxyalkyl(meth)acrylaten, beispielsweise den Mono(meth)acrylsäureestem von 1,2-Propandiol, Ethylenglykol, 1,3-propandiol, 1,4-Butandiol oder 1,6-Hexandiol.

Diese weisen vorzugsweise ein nach der Gelpermeationschromatographie bestimmbares Molekulargewicht Mₙ (Zahlenmittel) von 500 bis 50.000, insbesondere 1.000 bis 10.000 g/mol auf und eine Hydroxylzahl von 16,5 bis 264, vorzugsweise 33 bis 165 mg KOH/g Festharz.

Die Hydroxylgruppen aufweisenden Monomeren werden in solchen Mengen bei der Copolymerisation mitverwendet, daß die obengenannten Hydroxylzahlen der Polymerisate resultieren, die im übrigen im allgemeinen einem Hydroxylgruppengehalt der Polymerisate von 0,5 bis 8, vorzugsweise 1 bis 5 Gew.-% entsprechen. Im allgemeinen werden die hydroxyfunktionellen Comonomeren im Mengen von 3 bis 75, vorzugsweise 6 bis 47 Gew.-%, bezogen auf das Gesamtgewicht der eingesetzten Monomeren mitverwendet. Außerdem muß selbstverständlich darauf geachtet werden, daß im Rahmen der gemachten Angaben die Menge der hydroxyfunktionellen Monomeren so gewählt wird, daß Copolymerisate entstehen, die im statistischen Mittel pro Molekül mindestens zwei Hydroxylgruppen aufweisen.

Zu den nicht-hydroxyfunktionellen Monomeren gehören beispielsweise die oben unter c) aufgeführten Reaktiwerdünner, bevorzugt Ester der Acrylsäure bzw der Methacrylsäure mit 1 bis 18, vorzugsweise 1 bis 8 Kohlenstoffatomen im Alkoholrest wie z.B. Methylacrylat. Ethylacrylat, Isopropylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomerer. Auch Epoxidgruppen aufweisende Comonomere wie z.B. Glycidylacrylat oder -methacrylat oder Monomere wie N-Methoxymethylacrylamid oder -methacrylamid können in geringen Mengen mitverwendet werden.

Die Herstellung der Polymerisate kann durch Polymerisation nach üblichen Verfahren durchgeführt werden. Vorzugsweise erfolgt die Herstellung der Polymerisate in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemisches vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Gegebenenfalls wird anschließend noch nachaktiviert, um die Polymerisation bis zu einem Umsatz von mindestens 99 % durchzuführen.

Als Lösungsmittel kommen beispielsweise Aromaten, wie Benzol, Toluol, Xylol, Chlorbenzol, Ester wie Ethylacetat, Butylacetat, Methylglykolacetat, Ethylglykolacetat, Methoxypropylacetat, Ether wie Butylglykol, Tetrahydrofuran, Dioxan, Ethylglykolether, Ketone wie Aceton, Methylethylketon, halogenhaltige Lösemittel wie Methylenchlorid oder Trichlormonofluorethan in Betracht.

Weiterhin können noch niederinolekulare Di- und Polyole mit einem Molekulargewicht von etwa 50 bis 500, vorzugsweise von 60 bis 200 g/mol, eingesetzt werden.

Dazu werden vor allem die Aufbaukomponenten der für die Herstellung von Polyester polyolen genannten kurzkettigen Diole oder Polyole eingesetzt, wobei die Di- und Polyole mit 2 bis 12 C-Atomen bevorzugt werden.

In einer bevorzugten Ausführungsform der Erfindung sind mindestens eine Verbindung f) und mindestens eine Verbindung g) enthalten.

Ein weiterer Gegenstand der vorliegenden Erfindung ist ein Verfahren zur Herstellung der erfindungsgemäßen Beschichtungsmasse, in dem die Aufbaukomponenten a) und b) erst kurz vor der Aufbringung der Beschichtungsmasse auf das Substrat miteinander vermischt werden, bevorzugt nicht mehr als 60 min, besonders bevorzugt nicht mehr als 45 min, ganz besonders bevorzugt nicht mehr als 30 min und insbesondere nicht mehr als 15 min vorher. Bevorzugt werden die Aufbaukomponenten a) und b) jeweils in der Komponente c) gelöst oder suspendiert miteinander vermischt.

Sind zusätzlich die optionalen Aufbaukomponenten f) und g) vorhanden, so kann es sinnvoll sein, jeweils eine dieser Lösungen oder Suspensionen der Aufbaukomponenten a) und b) in c) zuzumischen, so daß Vormischungen entstehen, die a) und g) in c) sowie b) und f) in c) oder bevorzugt a) und f) in c) sowie b) und g) in c) enthalten.

Die erfindungsgemäßen Beschichtungsmassen sind in der Regel wie folgt zusammengesetzt:
a) 0,1 - 5 Gew%, bevorzugt 0,2 - 4, besonders bevorzugt 0,5 - 3 und ganz besonders bevorzugt 1-3 Gew%,
b) 0,01 - 2 Gew%, bevorzugt 0,1 - 1,5, besonders bevorzugt 0,2 -1 und ganz besonders bevorzugt 0,5 - 1 Gew%
c) 20 - 99 Gew%, bevorzugt 25 - 98, besonders bevorzugt 30 bis 95 und ganz besonders bevorzugt 40 bis 90 Gew%,
d) 0,1 bis 5 Gew%, bevorzugt 0,2 bis 4, besonders bevorzugt 0,3 bis 3 und ganz besonders bevorzugt 0,5 bis 2 Gew%,
e) 0-50 Gew%, bevorzugt 0 bis 40, besonders bevorzugt 5 bis 30 und ganz besonders bevorzugt 10 bis 25 Gew% sowie
f) 0-50 Gew%, bevorzugt 0 bis 40, besonders bevorzugt 5 bis 30 und ganz besonders bevorzugt 10 bis 25 Gew%
mit der Maßgabe, daß die Summe 100 Gew% ergibt.

Das Gewichtsverhältnis der beiden Komponenten des Redoxinitiatorsystems a) und b) kann von 10:1 bis 1:5 variieren, bevorzugt von 5:1 bis 1:1, besonders bevorzugt 3:1 bis 1:1.

Ebenfalls offenbart wird ein Verfahren zur Beschichtung von Substraten, in dem man mindestens eine erfindungsgemäße Beschichtungsmasse einsetzt.

Die Beschichtung der Substrate erfolgt nach üblichen, dem Fachmann bekannten Verfahren, wobei man wenigstens eine erfindungsgemäße Beschichtungsmasse oder diese enthaltende Lackformulierung auf das zu beschichtende Substrat in der gewünschten Stärke aufbringt und die flüchtigen Bestandteile der Beschichtungsmasse, gegebenenfalls unter Erhitzen, entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man die erfindungsgemäßen Beschichtungsmassen oder diese enthaltende Lackformulierungen, gegebenenfalls mit weiteren lacktypischen Additiven und thermisch härtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 120°C, bevorzugt zwischen 40 und 100 °C und besonders bevorzugt zwischen 40 und 80 °C, thermisch behandelt.

Unter einer Trocknung wird in diesem Fall ein Vorgang verstanden, während dessen nicht mehr als 10% aller härtbaren Verbindungen in der Beschichtungsmasse polymerisiert werden, bevorzugt nicht mehr als 8, besonders bevorzugt nicht mehr als 5 und ganz besonders bevorzugt nicht mehr als 2,5 %.

Das Verfahren zum Beschichten von Substraten kann auch so durchgeführt werden, daß nach dem Aufbringen der erfindungsgemäßen Beschichtungsmasse oder Lackformulierungen zunächst bei Temperaturen bis zu 160°C, bevorzugt zwischen 60 und 160°C, thermisch behandelt und anschließend mit Elektronenstrahlen oder UV Belichtung unter Sauerstoff oder bevorzugt unter Inertgas gehärtet wird.

Die Härtung der auf dem Substrat gebildeten Filme kann gewünschtenfalls ausschließlich thermisch erfolgen. Im allgemeinen und bevorzugt härtet man die Beschichtungen jedoch sowohl durch Bestrahlung mit energiereicher Strahlung als auch thermisch.

Gegebenenfalls kann, wenn mehrere Schichten des Beschichtungsmittels übereinander aufgetragen werden, nach jedem Beschichtungsvorgang eine thermische und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Härtung kann auch zusätzlich zur oder anstelle der thermischen Härtung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Bestrahlung kann bevorzugt auch unter Ausschluß von Sauerstoff, z. B. unter Inertgas-Atmosphäre, durchgeführt werden. Als Inertgase eignen sich vorzugsweise Stickstoff. Edelgase, Kohlendioxid oder Verbrennungsgase. Desweiteren kann die Bestrahlung erfolgen, indem die Beschichtungsmasse mit transparenten Medien abgedeckt wird. Transparente Medien sind z. B. Kunststofffolien. Glas oder Flüssigkeiten, z. B. Wasser. Besonders bevorzugt ist eine Bestrahlung in der Weise, wie sie in der DE-A1 199 57 900 beschrieben ist.

In einer bevorzugten Ausführungsform wird die Bestrahlung in Gegenwart eines Inertgases durchgeführt, das schwerer als Luft ist.

Das Molgewicht eines Inertgases, das schwerer ist als Luft ist größer als 28.8 g/mol (entspricht dem Molgewicht eines Gasgemisches von 20 % Sauerstoff O₂ und 80 % Stickstoff N₂), vorzugsweise größer 30 g/mol, besonders bevorzugt mindestens 32 g/mol, insbesondere größer 35 g/mol. In Betracht kommen z.B. Edelgase wie Argon, Kohlenwasserstoffe und halogenierte Kohlenwasserstoffe. Besonders bevorzugt ist Kohlendioxid.

Die Begriffe "Schutzgas" und "Inertgas" werden in dieser Schrift synonym verwendet und bezeichnen solche Verbindungen, die unter Bestrahlung mit energiereicher Strahlung nicht wesentlich mit den Beschichtungsmassen reagieren und deren Aushärtung bzgl. Geschwindigkeit und/oder Qualität nicht negativ beeinflussen. Insbesondere wird darunter ein niedriger Sauerstoffgehalt verstanden. Darin bedeutet "nicht wesentlich reagieren", daß die Inertgase unter der im Prozeß ausgeübten Bestrahlung mit energiereicher Strahlung zu weniger als 5 mol% pro Stunde, bevorzugt zu weniger als 2 mol% pro Stunde und besonders bevorzugt zu weniger als 1 mol% pro Stunde mit den Beschichtungsmassen oder mit anderen innerhalb der Vorrichtung vorhandenen Stoffen reagieren.

Während der Strahlungshärtung sollte der mittlere Sauerstoffgehalt (O₂) in der Schutzgasatmosphäre weniger als 15 Vol% betragen, bevorzugt weniger als 10 Vol%, besonders bevorzugt weniger als 8 Vol%, ganz besonders bevorzugt weniger als 6 Vol% und insbesondere weniger als 3 Vol %, jeweils bezogen auf die gesamte Gasmenge in der Schutzgasatmosphäre. Es kann sinnvoll sein, mittlere Sauerstoffgehalte unter 2,5 Vol%, bevorzugt unter 2,0 Vol% und besonders bevorzugt auch unter 1,5 Vol% einzustellen.

Ein weiterer Gegenstand der Erfindung ist ein Verfahren zur Beschichtung von Substraten, wobei man
i) ein Substrat mit einer Beschichtungsmasse, wie zuvor beschrieben, beschichtet,
ii) flüchtige Bestandteile der Beschichtungsmasse zur Filmbildung unter Bedingungen entfernt, bei denen der Photo- und/oder thermische Initiator im wesentlichen noch keine freien Radikale ausbildet,
iii) gegebenenfalls den in Schritt ii) gebildeten Film mit energiereicher Strahlung bestrahlt, wobei der Film vorgehärtet wird, und anschließend gegebenenfalls den mit dem vorgehärteten Film beschichteten Gegenstand mechanisch bearbeitet oder die Oberfläche des vorgehärteten Films mit einem anderen Substrat in Kontakt bringt,
iv) dem Film thermisch endhärtet.

Dabei können die Schritte iv) und iii) auch in umgekehrter Reihenfolge durchgeführt, d. h. der Film kann zuerst thermisch und dann mit energiereicher Strahlung gehärtet wert den.

Die erfindungsgemäßen Beschichtungsmassen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, die beispielsweise auch als Folien vorliegen können.

Besonders bevorzugt sind die erfindungsgemäßen Beschichtungsmassen geeignet zur Beschichtung von porösen Substraten, wie beispielsweise Holz oder mineralischen Baustoffen, da sich in den Poren oftmals Schattenbereiche ausbilden, die durch Strahlungshärtung nicht erreicht werden können. In Schattenbereichen, in denen Photoinitiatoren nicht durch UV-Strahlung aktiviert werden können, ist dann die thermische Härtung der erfindungsgemäßen Beschichtungsmassen möglich und führt zu einer durchgehenden Aushärtung der Beschichtung.

Besonders bevorzugt eignen sich die erfindungsgemäßen Beschichtungsmassen als oder in Außenbeschichtungen, also solche Anwendungen, die dem Tageslicht ausgesetzt sind, bevorzugt von Gebäuden oder Gebäudeteilen, lnnenbeschichtungen, Straßenmarkierungen, Beschichtungen auf Fahrzeugen und Flugzeugen. Insbesondere werden die erfindungsgemäßen Beschichtungsmassen als oder in Automobilklar- und/oder -decklacke(n) eingesetzt.

Bei einer Verwendung in Folien werden besondere Substrate bevorzugt:

Die Substratschicht besteht vorzugsweise aus einem thermoplastischen Polymer, insbesondere Polymethylmethacrylate, Polybutylmethacrylate, Polyethylenterephthalate, Polybutylenterephthalate, Polyvinylidenfluoride, Polyvinylchloride, Polyester, Polyolefine, Acrylnitrilethylenpropylendienstyrolcopolymere (A-EPDM), Polyetherimide, Polyetherketone, Polyphenylensulfide, Polyphenylenether oder deren Mischungen.

Weiterhin genannt seien Polyethylen, Polypropylen, Polystyrol, Polybutadien, Polyester, Polyamide, Polyether, Polycarbonat, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon.

Bevorzugt genannt seien ABS, AES, AMMA, ASA, EP, EPS, EVA, EVAL. HDPE, LDPE, MABS, MBS, MF, PA, PA6. PA66. PAN, PB. PBT. PBTP, PC, PE, PEC, PEEK, PEI, PEK. PEP, PES, PET, PETP, PF, PI, PIB, PMMA, POM, PP, PPS, PS, PSU, PUR, PVAC, PVAL, PVC, PVDC, PVP, SAN, SB, SMS, UF, UP-Kunststoffe (Kurzzeichen gemäß DIN 7728) und aliphatische Polyketone.

Besonders bevorzugte Substrate sind Polyolefine, wie z.B. PP(Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-Styrol-Copolymere), sowie deren physikalische Mischungen (Blends). Besonders bevorzugt sind PP, SAN, ABS, ASA sowie Blends von ABS oder ASA mit PA oder PBT oder PC.

Ganz besonders bevorzugt ist ASA, insbesondere gemäß DE 19 651 350 und der Blend ASA/PC. Bevorzugt ist ebenfalls Polymethylmethacrylat (PMMA) oder schlagzähmodifiziertes PMMA.

Es stellt einen Vorteil der vorliegenden Erfindung dar, daß mit dem erfindungsgemäßen Beschichtungsmassen, die sowohl thermisch- als auch strahlungsaktivierbare Radikalinitiatoren enthalten, radikalisch polymerisierbare Beschichtungsmassen auch unter sauerstoffhaltiger Atmosphäre gehärtet werden können. Bei einer Härtung der Beschichtungsmasse lediglich durch thermische Initiierung bleibt die Oberfläche durch Sauerstoffinhibierung häufig ungehärtet. Dies kann bei den erfindungsgemäßen Beschichtungsmassen durch zusätzliche Aktivierung der Photoinitiatoren durch Bestrahlung vermieden werden.

In dieser Schrift verwendete ppm- und Prozentangaben beziehen sich, falls nicht anders angegeben, auf Gewichtsprozente und -ppm.

### Beispiele

### Allgemein

Benzoylperoxid (bezogen von der Firma Aldrich), hier als BPO abgekürzt, wurde als Oxidationsmittel ausgewählt. Drei Amine (ebenfalls bezogen von Aldrich) wurden als Reduktionsmittel ausgewählt: N,N-Dimethyltoluidin (DMT, Vergleich), N,N-Dimethylanilin (DMA, Vergleich) und N-Phenyl diethanolamin (PDEA, erfindungsgemäß).

Bei dem in den nachfolgenden Beispielen verwendeten Harz handelte es sich um ein Polyurethanacrylat (PUA) als Harz, aufgebaut aus dem Isocyanurat von 1,6-Hexamethylendiisocyanat (Basonat® HI 100 der BASF AG in Ludwigshafen), einem kurzkettigen Diol als Kettenverlängerer und Hydroxyethyl acrylat, gemischt mit 30 Gew. % 1,6-Hexandioldiacrylat als Reaktivverdünner.

Da die Lösung von BPO in Harzen schwierig ist, wurden zwei intermediäre Formulierungen hergestellt, von denen eine das Polyurethanacrylat mit dem Peroxid enthält und die andere das Amin in dem PUA. Diese beiden Formulierungen wurden erst miteinander vermischt, nachdem die zu lösenden Bestandteile völlig aufgelöst waren, so daß während der Herstellung der Formulierungen keine ungewünschten Reaktionen stattfinden können.

Zwei α-Hydroxyphenylketone (Darocur® 1173 (2-Hydroxy-2-methyl-1-phenylpropan-1-on) und Irgacure® 184 (1-Hydroxy-cyclohexyl phenyl keton) von der Firma Ciba Spezialitätenchemie) und zwei Acylphosphinoxide (Irgacure® 819 (Bis(2,4,6-trimethylbenzoyl)-phenyl phosphinoxid) von der Firma Ciba Spezialitätenchemie und Lucirin® TPO-L (Ethyl-2,4,6-Trimethylbenzoylphenylphosphinat) von der Firma BASF) wurden als Photoinitiatoren eingesetzt, um das Harz photochemisch zu härten.

Eine typische Zusammensetzung, die im folgenden eingesetzt wurde, wenn nicht anders angegeben, war wie folgt:

| | |
|---|---|
| Polyurethanacrylat: | 97 Gew% |
| Darocur® 1173 : | 1 Cew% |
| BPO : | 1,5 Gew% |
| PDEA : | 0,5 Gew% |

Beispiel 1: Bestimmung der Topfzeit verschiedener Initiatorsysteme in Polyurethanacrylat

**Tabelle 1:**

| Initiatorsystem | Topfzeit | | |
|---|---|---|---|
| | 25°C | 60°C | 80°C |
| 1,5 Gew% | einige Monate | > 3 Std | < 3 Std |
| BPO | | | |
| 1 Gew% BPO | 10 Minuten / | / | / |
| - 1 Gew% | | | |
| DMA | | | |
| 1 Gew% BPO | < 1 Minute | / | / |
| - 1 Gew% | | | |
| DMT | | | |
| 1 Gew% BPO | 15 Minuten | / | / |
| -0,5 Gew% | | | |
| PDEA | | | |

Topfzeit des verwendeten Polyurethanacrylats mit verschiedenen Redoxsystemen bei unterschiedlichen Temperaturen verglichen mit der Stabilität des Polyurethanacrylats, das lediglich BPO enthält.

### Beispiel 2

Unter Luftatmosphäre durchgeführt war es nicht möglich, einen 70 µm dicken Film des verwendeten Polyurethanacrylats vollständig zu härten. Daher war es erforderlich, die Oberfläche durch eine UV-Exposition zu härten um so die Diffusion von Sauerstoff zu verhindern und die tieferen Schichten des Films thermisch zu härten.

**Tabelle 2: Persoz-Härte nach verschiedenen Härtungsvariationen des obigen Polyurethanacrylats enthaltend 1 Gew% Darocur® 1173 - 1,5 Gew% BPO - 0,5 Gew% PDEA bei einer UV-Dosis von 240 mJ×cm⁻² und entweder Luft- oder CO₂-Atmosphäre.**

| Härtung | Persoz Härte | |
|---|---|---|
| | INERT | Luft |
| UV-Härtung | 124 s | 78 s |
| 20 min 80°C | 208 s | bleibt flüssig |
| UV-Härtung + 20 min 80°C | 211 s | 158 s |
| UV-Härtung + 60 min 25°C | 200 s | 100 s |

### Beispiel 3: Thermische und Strahlungshärtung eines pigmentierten Systems

Die Effizienz des BPO/PDEA Redoxsystems dicke, pigmentierte Filme zu härten wurde ebenfalls für Polyurethanacrylate untersucht, die 3 Gew% Ruß als Pigment enthielten. Die Verwendung eines Acylphosphinoxid Photoinitiators allein ergab lediglich eine Härtung der oberen Schicht eines 7 mm dicken Films. Die Polymerisation an der Oberfläche kann nahezu vollständig durchgeführt werden, wenn man den Film eine hohen UV-Dosis aussetzt (Tabelle 3). Derartig dicke Filme, die 3 Gew% Ruß enthalten können jedoch nicht allein durch Einsatz eines Photoinitiators tiefengehärtet werden, nicht einmal durch Phosphinoxide wie Lucirin TPO-L, die nahe dem sichtbaren Bereich absorbieren. Sichtbares Licht dringt nämlich bei klaren Filmen tiefer in die Filme ein.

Hinzufügen von 1,5 Gew% BPO und 0,5 Gew% PDEA zur Polyurethanacrylatformulierung, die Ruß enthält, führt zur Härtung der gesamten 7 mm dicken Schicht innerhalb von 90 min bei Raumtemperatur. Wie aus der Sauerstoffinhibierung erwartet werden konnte, wurde eine vollständige Durchhärtung unter einer Inertatmosphäre erzielt. Dazu wurde in der Formulierung Darocur® 1173 als Photoinitiator gewählt um eine gute Oberflächenpolymerisierung zu erzielen, die leicht auf 100% Umsatz erhöht werden kann, indem man die UV-Expositionszeit erhöht.

**Tabelle 3:Acrylatumsatz an der Oberfläche, gemessen durch ATR Spektroskopie an einem pigmentierten System, das ein Redoxinitiatorsystern enthält. Initiator- 3 Gew% Ruß - Polyurethanacrylat, UV-Dosis = 300 mJ×cm⁻² pro Durchgang**

| Initiatorsystem | Härtung | Acrylat Umsatz auf beiden Oberflächen (ATR Messung) | | gehärtete Dicke |
|---|---|---|---|---|
| | | Oberseite (Luft) | Unterseite (Glas) | |
| 1 Gew% TPO-L | 1 UV Durchgang Luft | 53% | 0% | 0,3 mm |
| | 5 UV Durchgänge Luft | 99% | 0% | 0,9 mm |
| 1 Gew% Darocur® 1173 + 1,5 Gew% BPO + 0,5 Gew% PDEA | 1 UV Durchgang Luft + 50 Minuten 25°C Luft | 72% | 64% | 7 mm |
| | 1 UV Durchgang CO₂ + 90 min 25°C CO₂ | 81% | 99% | 7 mm |

### Beispiel 4: Vergilbungstest

Es ist zu befürchten, daß die Gegenwart des Amins PDEA in der Formulierung zu einer Vergilbung führen könnte. Um den Effekt einer Vergebung zu messen, wurden UV-Absorptionsspektren eines thermisch und UV-gehärteten Films, der eine Amin anthält aufgenommenund verglichen mit einer rein strahlungsgehärteten Probe des Polyurethanacrylats. Nach ca. 2000 Stunden UV-A Bestrahlung war keine Vergilbung bei der thermisch und UV-gehärteten Probe festzustellen, d.h. keine signifikante Zunahme der Absorbanz oberhalb von 400 nm. Die Anwesenheit des Amins hat daher keinen nachteiligen Efekt auf die optischen Eigenschaften des Überzugs, der klar und farblos bleibt, wenn man ihn diesem beschleunigten Bewitterungstest unterwirft.

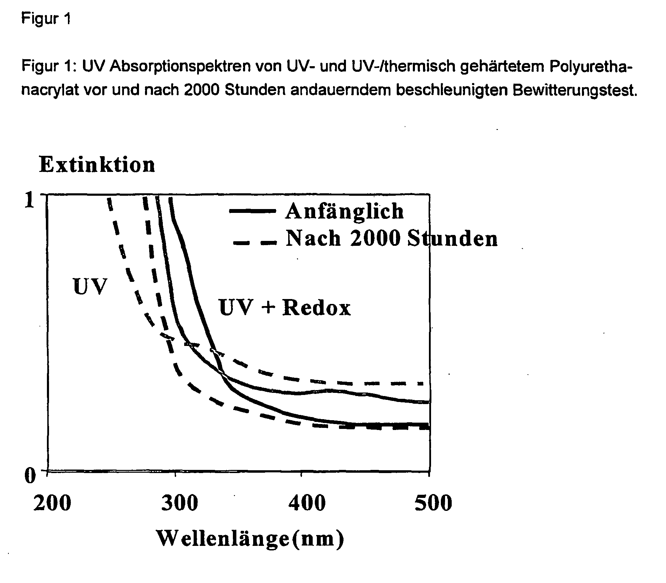

In Figur 1 sind die UV Absorptionspektren von UV- und UV-/thermisch gehärtetem Polyurethanacrylat vor und nach 2000 Stunden andauerndem beschleunigten Bewitterungstest dagestellt.

Formulierung: 1 Gew% Irgacure® 819 + 2 Gew% Darocur® 1173+1,5 Gew% BPO + 0,5 Gew% PDEA in Polyurethanacrylat. UV-Dosis = 350 mJ×cm⁻² + 60 Minuten erhitzen bei 80°C in einer CO₂ Atmosphäre, 1 Gew% Irgacure® 819 + 2 Gew% Darocur® 1173 in Polyurethanacrylat, UV-Dosis = 350 mJ×cm⁻², 16 µm Schichtdicke.

## Patentansprüche

1. Radikalisch härtbare Beschichtungsmassen, enthaltend
a) mindestens eine Verbindung (I) mit mindestens einer Peroxygruppe,
b) mindestens ein aromatisches Amin der Formel (II)
Ar-NR¹R²,
worin
Ar ein gegebenenfalls substituiertes aromatisches Ringsystem mit 6 bis 20 Kohlenstoffatomen und
R¹ und R² jeweils unabhängig voneinander gegebenenfalls substituierte Alkylreste bedeuten, mit der Maßgabe, daß mindestens einer der beiden Reste R¹ und R² mindestens 2 Kohlenstoffatome aufweist,
bedeuten,
c) mindestens eine Verbindung mit mindestens einer ethylenisch α,β-ungesättigten Carbonylverbindung,
d) mindestens einen Photoinitiator und
e) gegebenenfalls mindestens ein Pigment.

2. Beschichtungsmassen gemäß Anspruch 1, **dadurch gekennzeichnet, daß** die Verbindungen a) ausgewählt sind aus der Gruppe bestehend aus Diacylperoxiden, Dialkylperoxiden und Ketonperoxiden.

3. Beschichtungsmassen gemäß einem der vorstehenden Ansprüche, **dadurch gekennzeichnet, daß** Peroxyverbindung a) und Amin b) so gewählt sind, daß sie die 0,5 bis 1,5fache Reaktivität aufweisen wie ein Gemisch aus N,N-Di-(2-hydroxyethyl)-anilin und Dibenzoylperoxid, gemessen bei 25°C in Methacrylsäuremethylester in Form von 0,5 Gew%igen Zubereitungen des betreffenden Amins b) mit 1,5 Gew% der betreffenden Peroxyverbindung a), wobei als Reaktivität der Zeitraum zwischen Vermischen von Amin und Peroxyverbindung bis zum Anstieg der Viskosität infolge Gelbildung verstanden wird.

4. Beschichtungsmassen gemäß einem der vorstehenden Ansprüche, **dadurch gekennzeichnet, daß** das Amin b) ausgewählt ist aus der Gruppe bestehend aus N,N-Diethylanilin, N,N-Di-n-butylanilin, N,N-Di-iso-propylanilin, N-Methyl-N-(2-hydroxyethyl)-anilin, N-Methyl-N-(2-hydroxyethyl)-p-tolidin, N,N-Diethyl-o-tolidin, N,N-Di-n-butyl-o-tolidin, N,N-Diethyl-p-tolidin, N,N-Di-n-butyl-p-tolidin, N,N-Di-(2-hydroxyethyl)-anilin, N,N-Di-(2-hydroxyethyl)-o-tolidin, N,N-Di-(2-hydroxyethyl)-p-tolidin, N,N-Di-(2-hydroxypropyl)-anilin, N,N-Di-(2-hydroxypropyl)-p-tolidin und N,N-Di-(2-hydroxypropyl)-o-tolidin.

5. Beschichtungsmassen gemäß einem der vorstehenden Ansprüche, **dadurch gekennzeichnet, daß** es sich bei der Verbindung c) um mindestens einen ungesättigte Polyester oder um mindestens eine (Meth)Acrylatverbindung handelt.

6. Beschichtungsmassen gemäß einem der vorstehenden Ansprüche, **dadurch gekennzeichnet, daß** es sich bei der Verbindung c) um mindestens ein Urethan- oder Polyester(meth)acrylat handelt.

7. Beschichtungsmassen gemäß einem der vorstehenden Ansprüche, **dadurch gekennzeichnet, daß** mindestens ein Pigment e) enthalten ist.

8. Beschichtungsmassen gemäß einem der vorstehenden Ansprüche, **dadurch gekennzeichnet, daß** zusätzlich mindestens eine isocyanatgruppenhaltige Komponente f) und mindestens eine Komponente g), die mindestens eine gegenüber Isocyanat reaktive Gruppe enthält, enthalten ist.

9. Verfahren zur Herstellung von Beschichtungsmassen gemäß einem der vorstehenden Ansprüche, **dadurch gekennzeichnet, daß** man die Aufbaukomponenten a) und b) nicht mehr als 60 min vor der Aufbringung der Beschichtungsmasse auf das Substrat miteinander vermischt.

10. Verfahren gemäß Anspruch 9, **dadurch gekennzeichnet, daß** man die Aufbaukomponenten a) und b) jeweils in der Komponente c) gelöst oder suspendiert miteinander vermischt.

11. Verwendung von Beschichtungsmassen gemäß einem der Ansprüche 1 bis 8 zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen.

## Claims

1. A free-radically curable coating composition comprising
a) at least one compound (I) having at least one peroxy group,
b) at least one aromatic amine of the formula (II)
Ar-NR¹R²,
in which
Ar is an optionally substituted aromatic ring system having 6 to 20 carbon atoms and
R¹ and R² each independently of one another are optionally substituted alkyl radicals, with the proviso that at least one of the two radicals R¹ and R² has at least 2 carbon atoms,
c) at least one compound having at least one ethylenically α, β-unsaturated carbonyl compound,
d) at least one photoinitiator, and
e) if appropriate, at least one pigment.

2. The coating composition according to claim 1, wherein the compounds a) are selected from the group consisting of diacyl peroxides, dialkyl peroxides, and ketone peroxides.

3. The coating composition according to either of the above claims, wherein peroxy compound a) and amine b) are chosen such that they have 0.5 to 1.5 times the reactivity of a mixture of N,N-di(2-hydroxyethyl)aniline and dibenzoyl peroxide, measured at 25°C in methyl methacrylate, in the form of 0.5% by weight preparations of the respective amine b) with 1.5% by weight of the respective peroxy compound a), said reactivity being understood as the time between the mixing of amine and peroxy compound and the viscosity increase due to gelling.

4. The coating composition according to any one of the above claims, wherein the amine b) is selected from the group consisting of N,N-diethylaniline, N,N-din-butylaniline, N,N-diisopropylaniline, N-methyl-N-(2-hydroxyethyl)aniline, N-methyl-N-(2-hydroxyethyl)-p-tolidine, N,N-diethyl-o-tolidine, N,N-di-n-butyl-o-tolidine, N,N-diethyl-p-tolidine, N,N-di-n-butyl-p-tolidine, N,N-di-(2-hydroxyethyl)-aniline, N,N-di-(2-hydroxyethyl)-o-tolidine, N,N-di-(2-hydroxyethyl)-p-tolidine, N,N-di-(2-hydroxypropyl)aniline, N,N-di-(2-hydroxypropyl)-p-tolidine, and N,N-di(2-hydroxypropyl)-o-tolidine.

5. The coating composition according to any one of the above claims, wherein compound c) comprises at least one unsaturated polyester or at least one (meth)acrylate compound.

6. The coating composition according to any one of the above claims, wherein compound c) comprises at least one urethane (meth) acrylate or polyester (meth) acrylate.

7. The coating composition according to any one of the above claims, comprising at least one pigment e).

8. The coating composition according to any one of the above claims, further comprising at least one isocyanate-functional component f) and at least one component g) comprising at least one isocyanate-reactive group.

9. A process for preparing a coating composition according to any one of the above claims, which comprises mixing the constituent components a) and b) with one another not more than 60 minutes before applying the coating composition to the substrate.

10. The process according to claim 9, wherein the constituent components a) and b) are mixed with one another each in suspension or solution in component c) .

11. The use of a coating composition according to any one of claims 1 to 8 for coating substrates such as wood, paper, textile, leather, nonwoven, plastics surfaces, glass, ceramic, mineral building materials, such as cement moldings and fiber-cement slabs, or coated or uncoated metals.

## Revendications

1. Matières pour revêtement durcissables par voie radicalaire, contenant
a) au moins un composé (I) ayant au moins un groupement peroxy,
b) au moins une amine aromatique de formule (II)
Ar-NR¹R²
dans laquelle
Ar représente un système cyclique aromatique éventuellement substitué ayant 6 à 20 atomes de carbone et
R¹ et R² représentent chacun indépendant l'un de l'autre des radicaux alkyles éventuellement substitués, à condition qu'au moins un des deux radicaux R¹ et R² comporte au moins 2 atomes de carbone,
c) au moins un composé ayant au moins une liaison carbonyle éthyléniquement α,β-insaturée,
d) au moins un photoinitiateur et
e) éventuellement au moins un pigment.

2. Matières pour revêtement selon la revendication 1, **caractérisées en ce que** les composés a) sont choisis dans le groupe constitué des peroxydes de diacyle, des peroxydes de dialkyle et des peroxydes de cétone.

3. Matières pour revêtement selon l'une quelconque des revendications précédentes, **caractérisées en ce que** le composé peroxy a) et l'amine b) sont choisis de manière à ce qu'ils présentent 0,5 à 1,5 fois la réactivité d'un mélange de N,N-di(2-hydroxyéthyl)-aniline et de peroxyde de dibenzoyle, mesurée à 25 °C dans de l'ester méthylique de l'acide méthacrylique sous la forme de préparations à 0,5 % en poids de l'amine b) correspondante avec 1,5 % en poids du composé peroxy a) correspondant, la réactivité étant définie comme la durée entre le mélange de l'amine et du composé peroxy et l'augmentation de la viscosité à la suite de la formation d'un gel.

4. Matières pour revêtement selon l'une quelconque des revendications précédentes, **caractérisées en ce que** l'amine b) est choisie dans le groupe constitué de la N,N-diéthylaniline, de la N,N-di-n-butylaniline, de la N,N-di-iso-propylaniline, de la N-méthyl-N-(2-hydroxyéthyl)-aniline, de la N-méthyl-N-(2-hydroxyéthyl)-p-tolidine, de la N,N-diéthyl-o-tolidine, de la N,N-di-n-butyl-o-tolidine, de la N,N-diéthyl-p-tolidine, de la N,N-di-n-butyl-p-tolidine, de la N,N-di-(2-hydroxyéthyl)-aniline, de la N,N-di-(2-hydroxyéthyl)-o-tolidine, de la N,N--di-(2-hydroxyéthyl)-p-tolidine, de la N,N-di-(2-hydroxypropyl)-aniline, de la N,N-di-(2-hydroxypropyl)-p-tolidine et de la N,N-di-(2-hydroxypropyl)-o-tolidine.

5. Matières pour revêtement selon l'une quelconque des revendications précédentes, **caractérisées en ce que** le composé c) est au moins un polyester insaturé ou au moins un composé de (méth)acrylate.

6. Matières pour revêtement selon l'une quelconque des revendications précédentes, **caractérisées en ce que** le composé c) est au moins un (méth)acrylate d'uréthanne ou de polyester.

7. Matières pour revêtement selon l'une quelconque des revendications précédentes, **caractérisées en ce qu'**elles contiennent au moins un pigment e).

8. Matières pour revêtement selon l'une quelconque des revendications précédentes, **caractérisées en ce qu'**elles contiennent également au moins un composant f) qui contient des groupements isocyanates et au moins un composant g) qui contient au moins un groupement réactif envers les isocyanates.

9. Procédé de fabrication de matières pour revêtement selon l'une quelconque des revendications précédentes, **caractérisé en ce que** les composants constitutifs a) et b) ne sont pas mélangés l'un avec l'autre plus de 60 minutes avant l'application de la matière pour revêtement sur le substrat.

10. Procédé selon la revendication 9, **caractérisé en ce que** les composants constitutifs a) et b) sont mélangés l'un avec l'autre chacun dissous ou mis en suspension dans le composant c).

11. Utilisation des matières pour revêtement selon l'une quelconque des revendications 1 à 8 pour l'enduction de substrats tels que le bois, le papier, les textiles, le cuir, les non-tissés, les surfaces plastiques, le verre, la céramique, les matériaux minéraux, tels que les blocs de ciment et les plaques en fibrociment, ou les métaux ou les métaux enduits.
